# EUROPEAN PATENT APPLICATION

(11) **EP 4 831 028 A1**
(43) Date of publication of application: **28.10.2026**
(21) Application number: 26174166.4
(22) Date of filing: 23.04.2026
(51) Int. Cl.: B60W 30/18, B60K 35/81, B60W 30/16

(54) **VEHICLE DISPLAY CONTROL DEVICE**

(30) Priority: 24.04.2025 JP 2025072721
(71) Applicant: Toyota Jidosha Kabushiki Kaisha, Toyota-shi, Aichi-ken 471-8571 (JP)
(72) Inventor: KONISHI, Shogo, TOYOTA-SHI, AICHI-KEN, 471-8571 (JP); HATTORI, Tsutomu, TOYOTA-SHI, AICHI-KEN, 471-8571 (JP); NISHIDA, Takashi, TOYOTA-SHI, AICHI-KEN, 471-8571 (JP); TAKADA, Arata, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-CITY, AICHI-PREF, 448-8661 (JP)
(74) Representative: Cabinet Beau de Loménie

(57) **Abstract**

A vehicle display control device (10) includes: a recognition unit (52) configured to recognize a host lane on which a host vehicle travels and an adjacent lane; a detection unit (54) configured to detect a lane change instruction in a case where a preceding vehicle following function of the host vehicle is valid; an acquisition unit (56) configured to acquire a first guard value that is an allowable upper limit value, and a second guard value that is an allowable upper limit value; and a display controller configured to display a host lane image in a range up to the first guard value that is acquired and display a path image such that a center of the path image in a lane width direction is positioned in a range up to the second guard value that is acquired, in a case where the detection unit (54) detects the lane change instruction.

## Description

### BACKGROUND OF THE INVENTION

### 1. Field of the Invention

The present disclosure relates to a technology for a vehicle display control device.

### 2. Description of Related Art

Japanese Unexamined Patent Application Publication No. 2024-079068 (JP 2024-079068 A) discloses a vehicle control device that can execute lane change assist control of a vehicle over a plurality of lanes even when an occupant does not operate an operation member after the lane change assist control is started. The vehicle control device includes a controller that causes the vehicle to execute the lane change assist control when the operation member that is operable by the occupant of the vehicle is operated. The controller executes first lane change assist control of moving the vehicle from a traveling lane that is a lane on which the vehicle is traveling to an adjacent lane in a case where a first operation is executed on the operation member, and executes second lane change assist control of moving the vehicle from the traveling lane to a spaced lane that is a lane on the opposite side of the adjacent lane from the traveling lane in a case where a second operation different from the first operation is executed on the operation member.

### SUMMARY OF THE INVENTION

A lane change via lane change assist (LCA) is performed from a host lane on which a vehicle travels to an adjacent lane, and a path image indicating a lane change path displayed in a display region of the vehicle is also drawn toward a position indicating the adjacent lane. Here, the display position of a host lane image simulating the host lane according to a recognition state around the vehicle may be largely deviated from an original position, and the center position of the adjacent lane as a target of the lane change path via the LCA may also be a position largely deviated. That is, there is a problem in reducing anxiety given to an occupant due to the deviation between a real scene and display of the display region in a case of the lane change.

An object of the disclosed technology is to provide a vehicle display control device that reduces anxiety given to an occupant due to a deviation between a real scene and display of a display region when lane change is performed.

A vehicle display control device according to a first aspect includes: a recognition unit configured to recognize a host lane on which a host vehicle travels and an adjacent lane that is adjacent to the host lane; a detection unit configured to detect a lane change instruction for the host vehicle in a case where a preceding vehicle following function of the host vehicle is valid; an acquisition unit configured to acquire a first guard value that is an allowable upper limit value in a lane width direction of a position at which a host lane image simulating the host lane is displayed in a display region provided in the host vehicle, and a second guard value that is an allowable upper limit value in the lane width direction when a path image is displayed, the path image simulating a lane change path from the host lane to the adjacent lane when the host vehicle changes a lane; and a display controller configured to display the host lane image in a range up to the first guard value that is acquired and display the path image such that a center of the path image in the lane width direction is positioned in a range up to the second guard value that is acquired, in a case where the detection unit detects the lane change instruction. With the vehicle display control device according to the first aspect, it is possible to reduce anxiety given to the occupant due to the deviation between a real scene and the display of the display region when a lane change is performed.

According to a second aspect of the vehicle display control device, in the vehicle display control device according to the first aspect, the first guard value may be a value of a component in the lane width direction of a coordinate indicating a position of a lane boundary of the adjacent lane recognized when the lane change instruction is detected, the lane boundary being not in contact with the host lane. With the vehicle display control device according to the second aspect, it is possible to suppress the host lane image from being displayed at a position beyond the adjacent lane.

According to a third aspect of the vehicle display control device, in the vehicle display control device according to the first or second aspect, the second guard value may be is a value of a component in the lane width direction of a coordinate indicating a center position of the adjacent lane recognized when the lane change instruction is detected. With the vehicle display control device according to the third aspect, it is possible to suppress the coordinate serving as a reference in a case where the path image is displayed from being set at a position beyond the center position of the adjacent lane.

According to a fourth aspect of the vehicle display control device, in the vehicle display control device according to any one of the first to third aspects, the display controller may be configured to set, in the range up to the second guard value that is acquired, a vehicle-to-vehicle distance coordinate serving as a reference when an icon indicating a set vehicle-to-vehicle distance is displayed, and display the icon. With the vehicle display control device according to the fourth aspect, it is possible to suppress the display position of the icon indicating the set vehicle-to-vehicle distance from being largely deviated.

According to a fifth aspect of the vehicle display control device, in the vehicle display control device according to any one of the first to fourth aspects, the display controller may be configured to set, in the range up to the second guard value that is acquired, a first reference coordinate indicating a turning-completion position of the lane change path on the adjacent lane and a second reference coordinate indicating a position where control relating to the lane change ends, the first reference coordinate and the second reference coordinate serving as references when the path image is displayed, and display the path image on a trajectory connecting points indicated by the first reference coordinate and the second reference coordinate. With the vehicle display control device according to the fifth aspect, it is possible to suppress the display of the path image from being largely deviated.

According to the disclosed technology, it is possible to reduce anxiety given to an occupant due to a deviation between a real scene and the display of the display region when a lane change is performed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing an example of a hardware configuration of a vehicle display control device according to the present embodiment;
FIG. 2 is a block diagram showing an example of a functional configuration of the vehicle display control device according to the present embodiment;
FIG. 3 is an explanatory diagram for describing an image displayed on a display section according to the present embodiment;
FIG. 4 is a display example in a case where peripheral information of a vehicle according to the present embodiment is not correctly displayed;
FIG. 5 is a flowchart showing an example of a flow of detection processing according to the present embodiment; and
FIG. 6 is a flowchart showing an example of a flow of display control processing according to the present embodiment.

### DETAILED DESCRIPTION OF EMBODIMENTS

A vehicle display control device 10 mounted on a vehicle (hereinafter, also referred to as a host vehicle) according to the present embodiment will be described with reference to the drawings.

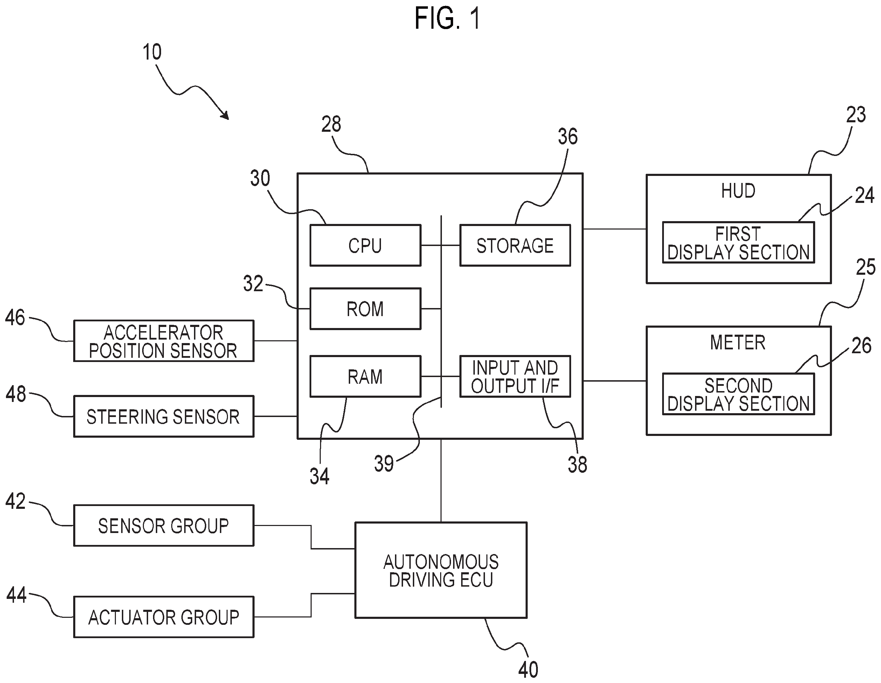

As shown in FIG. 1, the vehicle display control device 10 according to the embodiment includes an electronic control unit (ECU) 28.

The ECU 28 includes a central processing unit (CPU: processor) 30, a read-only memory (ROM) 32, a random-access memory (RAM) 34, a storage 36, and an input and output interface 38. The configurations are connected to communicate with each other via an internal bus 39.

The CPU 30 is a central arithmetic processing unit, and executes various programs or controls each unit. That is, the CPU 30 reads a program from the ROM 32 or the storage 36, and executes the program using the RAM 34 as a work area. The CPU 30 controls the above-described respective configurations and executes various kinds of arithmetic processing according to the program recorded in the ROM 32 or the storage 36.

The ROM 32 stores various programs and various kinds of data. For example, the ROM 32 stores a guard value described below. The RAM 34 temporarily stores the program or data, as the work area. The storage 36 is a non-transitory storage medium that is configured by a storage medium such as an embedded multimedia card (eMMC) or a universal flash storage (UFS), and stores various programs including an operating system and various kinds of data. In the present embodiment, the ROM 32 or the storage 36 stores a program or the like for performing various types of processing. In addition, various input and output devices are connected to the input and output interface 38.

Here, the ECU 28 is electrically connected to an autonomous driving ECU 40. The autonomous driving ECU 40 includes a CPU, a ROM, a RAM, a storage, an input and output interface, and the like (none of which is shown), similarly to the ECU 28.

A sensor group 42 that detects a current situation of the vehicle and an actuator group 44 that controls traveling of the vehicle are connected to the autonomous driving ECU 40. The sensor group 42 includes a plurality of sensors among various sensors such as a camera, radar, light detection and ranging or laser imaging detection and ranging (LIDAR), and a global positioning system (GPS) sensor. The camera images a periphery of the vehicle. The radar measures a distance and detects a direction to an object around the vehicle by radio waves. The LIDAR measures a distance and detects a direction to an object around the vehicle by laser light. The GPS sensor detects a current position of the vehicle. In addition, the sensor group 42 includes a sensor that detects a state of an occupant. For example, the sensor group 42 may include a biological sensor that measures a heart rate, an alertness level, and the like of the occupant.

The actuator group 44 includes an acceleration and deceleration actuator that adjusts acceleration and deceleration of the vehicle and a steering actuator that drives a steering device of the vehicle. The autonomous driving ECU 40 performs autonomous driving of the vehicle by controlling an operation of the actuator group 44 in accordance with the current situation of the vehicle detected by the sensor group 42. A scheduled path representing a route on which the vehicle is scheduled to travel is stored in a storage unit of the autonomous driving ECU 40, and the autonomous driving ECU 40 causes the vehicle to travel along the scheduled path stored in the storage unit.

A head-up display device 23 and a meter 25 are connected to the ECU 28. A first display section 24 is configured by a projection surface projected by the head-up display device 23. In addition, a second display section 26 is a display section displayed on the meter 25, and the meter 25 is positioned in a front area of the vehicle in a driver's seat on an instrument panel (not shown) provided in a front portion of a vehicle cabin of the vehicle. The first display section 24 and the second display section 26 are provided at positions visible to the driver. Hereinafter, the first display section 24 and the second display section 26 are collectively referred to as a display section in a case where there is no need to distinguish between the first display section 24 and the second display section 26. The first display section 24 and the second display section 26 are examples of a "display region provided in the host vehicle". In the present embodiment, at least one of the first display section 24 and the second display section 26 may be configured to display various images described below. In addition, the first display section 24 may be configured to display, in a case where a display region of the first display section 24 is narrower than a display region of the second display section 26, a part of an image of the second display section 26.

An accelerator position sensor 46 and a steering sensor 48 are connected to the ECU 28. The accelerator position sensor 46 is a sensor that detects a position of an accelerator pedal (not shown) provided below the driver's seat. In addition, the steering sensor 48 is a sensor that measures a load applied to a steering wheel 16 by the occupant. That is, the steering sensor 48 according to the present embodiment is configured to measure the load in a case where the occupant operates the steering wheel 16, and not to detect the load in a case where the steering wheel 16 is operated by the autonomous driving ECU 40 during autonomous driving.

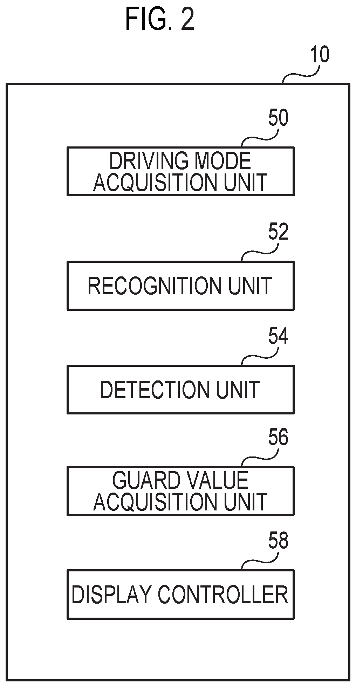

The vehicle display control device 10 implements various functions by using the above-described hardware resources. A functional configuration of the vehicle display control device 10 will be described with reference to FIG. 2.

As shown in FIG. 2, the vehicle display control device 10 includes a driving mode acquisition unit 50, a recognition unit 52, a detection unit 54, a guard value acquisition unit 56, and a display controller 58 as functional configurations. Each functional configuration is implemented by the CPU 30 of the ECU 28 that reads out and executes a program.

The driving mode acquisition unit 50 acquires information on whether a driving mode of the vehicle is a manual driving mode or an autonomous driving mode. Here, the manual driving mode in the present embodiment refers to a driving mode in which the vehicle travels through a driving operation of the occupant. In addition, the autonomous driving mode in the present embodiment refers to a driving mode in which the vehicle travels without an accelerator operation of the occupant. The autonomous driving mode refers to, for example, a case where an adaptive cruise control (ACC) is in operation. The ACC is a driving assistance function of recognizing a preceding vehicle by using a camera and radar (for example, a monocular camera and millimeter wave radar) included in the sensor group 42 and supporting following traveling while a vehicle-to-vehicle distance according to a vehicle speed is maintained. The driving mode acquisition unit 50 acquires information on the driving mode based on, for example, a signal from the autonomous driving ECU 40. The ACC is an example of a "preceding vehicle following function".

The recognition unit 52 has a function of recognizing a lane. Specifically, the recognition unit 52 recognizes a relative position of the lane with respect to the vehicle based on a signal from the sensor group 42 connected to the autonomous driving ECU 40. The recognition unit 52 recognizes, for example, a relative position of a host lane with respect to the vehicle and a relative position of an adjacent lane adjacent to the host lane.

The detection unit 54 has a function of detecting an operation instruction of the driving assistance function. The detection unit 54 detects, for example, an operation instruction of lane change assist control (LCA). Here, the LCA is a driving assistance function that is started by a turn signal operation of the occupant. In addition, the LCA performs steering assistance and peripheral monitoring assistance during the lane change and automatically turns off the turn signal after the lane change. The detection unit 54 detects the operation instruction of the LCA based on, for example, a signal from the autonomous driving ECU 40.

The guard value acquisition unit 56 has a function of acquiring a guard value that is a limit value in a case where an image related to the peripheral information of the vehicle is displayed on the display section. Here, the guard value is a value that limits a position at which an image indicating the host lane, an image indicating the lane change path via the LCA, an image indicating the vehicle-to-vehicle distance that is set (hereinafter, also referred to as a set vehicle-to-vehicle distance), and the like are displayed. The guard value is, for example, a coordinate of an image indicating the host lane displayed on the display section in a lane width direction. The guard value according to the present embodiment includes a first guard value that is a limit value of a coordinate at which an image indicating the host lane is displayed, and a second guard value that is a limit value of a coordinate at which an image indicating the lane change path and an image indicating the set vehicle-to-vehicle distance are displayed. The guard value acquisition unit 56 is an example of an "acquisition unit". The limit value is an example of an "allowable upper limit value".

The display controller 58 displays the peripheral information of the vehicle on the display section provided in the vehicle cabin. Specifically, the display controller 58 acquires a signal from the sensor group 42 and displays the peripheral information of the vehicle based on the acquired signal on the display section. The display controller 58 displays, for example, a host lane image indicating the host lane. In addition, the display controller 58 corrects and displays a position at which the peripheral information of the vehicle is displayed, based on the guard value acquired by the guard value acquisition unit 56. For example, in a case where a position at which the host lane image is displayed is a position beyond a range indicated by the first guard value, the display controller 58 corrects the position at which the host lane image is displayed to be within the range indicated by the first guard value and displays the host lane image.

In addition, in a case where the driving mode acquired by the driving mode acquisition unit 50 is the autonomous driving mode and the operation instruction of the LCA is detected, the display controller 58 displays an image indicating the lane change path via the LCA on the display section. Specifically, the display controller 58 displays a trajectory image indicating the lane change path on the display section. The display controller 58 according to the present embodiment displays the trajectory image on a trajectory connecting respective coordinate points of a position where turning from the host lane starts, a position where the turning to the adjacent lane is completed, and a position where the control of the LCA ends in the lane change path acquired by the function of the LCA. The trajectory image is an example of a "path image". The coordinate corresponding to the position where the turning to the adjacent lane is completed is an example of a "first reference coordinate". In addition, the coordinate corresponding to the position where the control of the LCA ends is an example of a "second reference coordinate".

In addition, in a case where the driving mode acquired by the driving mode acquisition unit 50 is at least the autonomous driving mode, the display controller 58 displays an image indicating the set vehicle-to-vehicle distance on the display section. Specifically, the display controller 58 acquires the set vehicle-to-vehicle distance in the autonomous driving mode and displays a target bar indicating the acquired set vehicle-to-vehicle distance on the display section. The target bar is an example of an "icon".

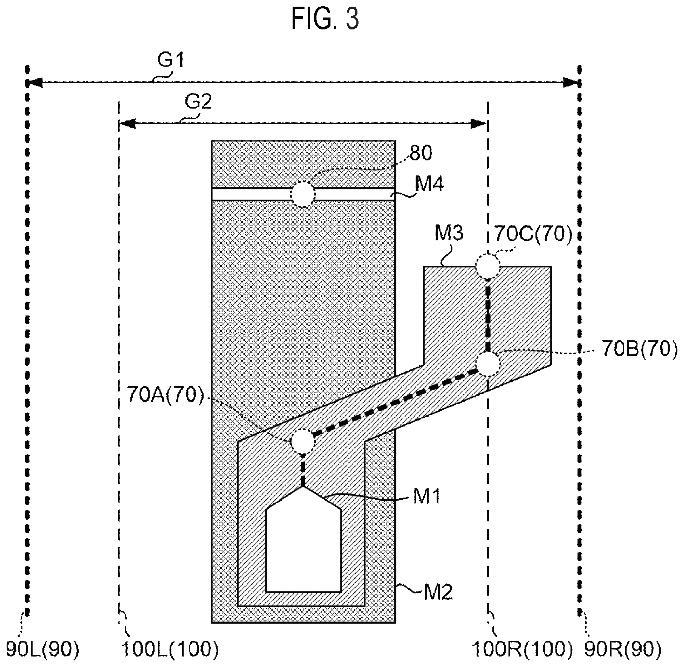

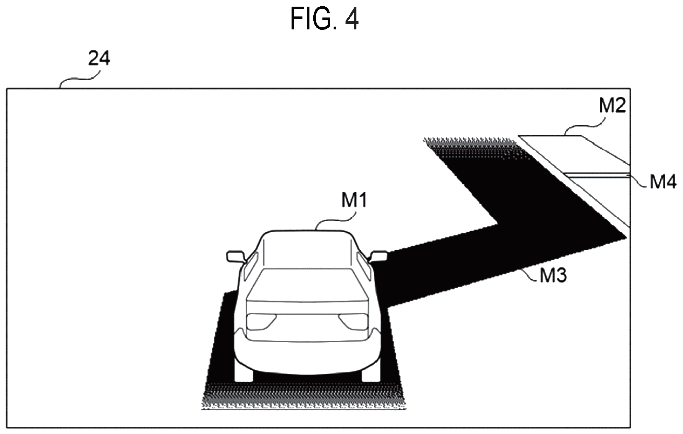

Next, the guard value according to the present embodiment will be described with reference to FIGS. 3 and 4. FIG. 3 is an explanatory diagram for describing an image displayed on the display section according to the present embodiment. FIG. 3 is a plan view showing a positional relationship of an image related to the peripheral information of the vehicle displayed on the display section in a case where the operation instruction of the LCA is detected, from above. In the following description, a lateral direction refers to a left-right direction of a host vehicle image, and a longitudinal direction refers to a front-rear direction of the host vehicle image. In addition, the lateral direction matches a lane width direction of a host lane image M2 described below.

As shown in FIG. 3, a host vehicle image M1, the host lane image M2, a trajectory image M3, and a target bar M4 are displayed on the display section. Broken lines 90 are auxiliary lines that are not displayed on the display section. The auxiliary lines each indicate the position of a lane divider, among lane dividers of an adjacent lane, that is remote from the host lane in the case where the operation instruction of the LCA is detected. The broken lines 90 include a broken line 90L indicating the position of a lane divider on the left side of an adjacent lane positioned on the left side of the host lane and a broken line 90R indicating the position of a lane divider on the right side of an adjacent lane positioned on the right side of the host lane. In addition, broken lines 100 are auxiliary lines that are not displayed on the display section. The auxiliary lines each indicate the center position of the adjacent lane in the lateral direction in the case where the operation instruction of the LCA is detected. The broken lines 100 include a broken line 100L indicating the center position of the adjacent lane on the left side of the host lane in the lateral direction and a broken line 100R indicating the center position of the adjacent lane on the right side of the host lane in the lateral direction. For example, an image indicating the lane divider at the position of each of the broken lines 90 and an image indicating the center position of the lane in the lateral direction at the position of each of the broken lines 100 may be displayed on the display section. The lane divider is an example of a "lane boundary line".

The host vehicle image M1 is an image simulating the vehicle. The host vehicle image M1 is displayed to be superimposed on the host lane image M2 and the trajectory image M3 in a lower portion of the display region of the display section. In addition, the host lane image M2 is an image simulating the host lane on which the vehicle is traveling.

The trajectory image M3 is an image indicating the lane change path of the vehicle. The trajectory image M3 is displayed to be superimposed on the host lane image M2. The trajectory image M3 according to the present embodiment is displayed as a green band-shaped image extending from a position where the host vehicle image M1 is displayed to a position indicating an end point of the lane change path. The trajectory image M3 is displayed on, for example, a trajectory connecting points indicated by a plurality of reference coordinates 70. The reference coordinates 70 according to the present embodiment include reference coordinates 70A, 70B, 70C. The reference coordinate 70A is a coordinate indicating the position where the turning from the host lane starts. In addition, the reference coordinate 70B is a coordinate indicating the position where the turning to the adjacent lane is completed. In addition, the reference coordinate 70C is a coordinate indicating the position where the control of the LCA ends.

The target bar M4 is an image indicating the set vehicle-to-vehicle distance. The target bar M4 is displayed to be superimposed on the host lane image M2 in front of the host vehicle image M1. The target bar M4 is displayed as, for example, a bar image extending in the lateral direction around a vehicle-to-vehicle distance coordinate 80 that is a coordinate serving as a reference in a case where the target bar M4 is displayed. The vehicle-to-vehicle distance coordinate 80 is a coordinate at the center position of the host lane image M2 in the lateral direction, and is a coordinate whose longitudinal component is changed in accordance with the set vehicle-to-vehicle distance in the autonomous driving mode of the vehicle.

FIG. 4 is a display example in a case where the peripheral information of the vehicle according to the present embodiment is not correctly displayed. In FIG. 4, display positions of the host lane image M2, the trajectory image M3, and the target bar M4 are largely deviated from a display position of the host vehicle image M1 because of, for example, an error in the recognition of the host lane caused by lateral movement of the vehicle when a lane change is performed.

As shown in FIG. 4, the host lane image M2 and the target bar M4 are displayed at positions that are separated, in the right direction, from the position where the host vehicle image M1 is displayed by at least a length indicating a road width of one lane. In addition, in the trajectory image M3, a position where the position where the turning to the adjacent lane is completed and the position where the control of the LCA ends are separated, in the right direction, from the position where the host vehicle image M1 is displayed by at least a length indicating a road width of one lane. As shown in FIG. 4, in a case where the display in which the actual peripheral situation of the vehicle and the display of the display region deviate from each other is performed, the occupant may be anxious. Therefore, the vehicle display control device 10 according to the present embodiment corrects the display positions of the images such that the display positions do not deviate extremely from the actual peripheral situation by setting the guard value described above. Hereinafter, the correction of the display position using the guard value will be described.

A range G1 sandwiched between the broken lines 90 in FIG. 3 indicates a range in which the host lane image M2 is displayed. In other words, the first guard value in a case where the host lane image M2 is displayed is a limit value indicating the range G1. For example, the first guard value is a value of the lateral components of the respective coordinates of the broken line 90L and the broken line 90R. For example, in a case where the host lane image M2 is displayed at a position beyond the broken line 90R (see FIG. 4), the host lane image M2 is corrected to be displayed at a position up to the broken line 90R. Therefore, the vehicle display control device 10 according to the present embodiment displays the host lane image M2 to move in the range indicated by the range G1 in a case where the lane change via the function of the LCA is performed.

A range G2 sandwiched between the broken lines 100 indicates a range in which the reference coordinates 70B, 70C and the vehicle-to-vehicle distance coordinate 80 are set. In other words, the second guard value in a case where the reference coordinates 70B, 70C and the vehicle-to-vehicle distance coordinate 80 are set is a limit value indicating the range G2. For example, the second guard value is a value of the lateral components of the respective coordinates of the broken line 100L and the broken line 100R. For example, in a case where the center position of the trajectory image M3 (that is, the reference coordinates 70B, 70C) is a position beyond the broken line 100R (see FIG. 4), the center position of the trajectory image M3 is corrected to be a position up to the broken line 100R. In addition, for example, in a case where the center position of the target bar M4 (that is, the vehicle-to-vehicle distance coordinate 80) is a position beyond the broken line 100R (see FIG. 4), the center position of the target bar M4 is corrected to be a position up to the broken line 100R. Therefore, the vehicle display control device 10 according to the present embodiment moves the center position of the trajectory image M3 and the center position of the target bar M4 in the range indicated by the range G2 in the case where the lane change via the function of the LCA is performed.

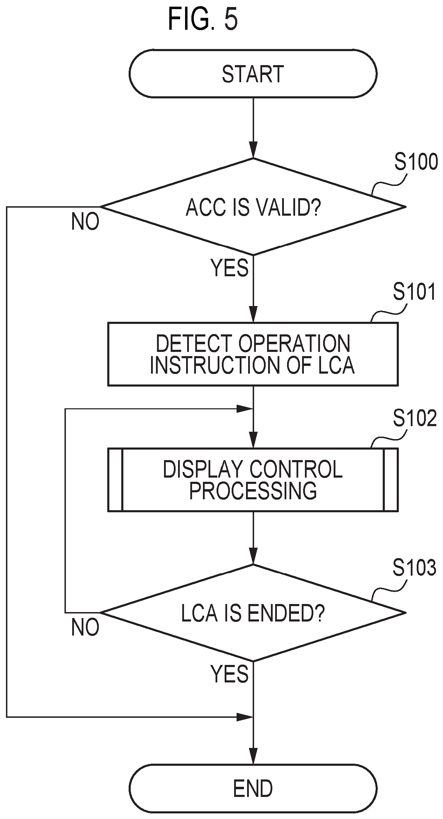

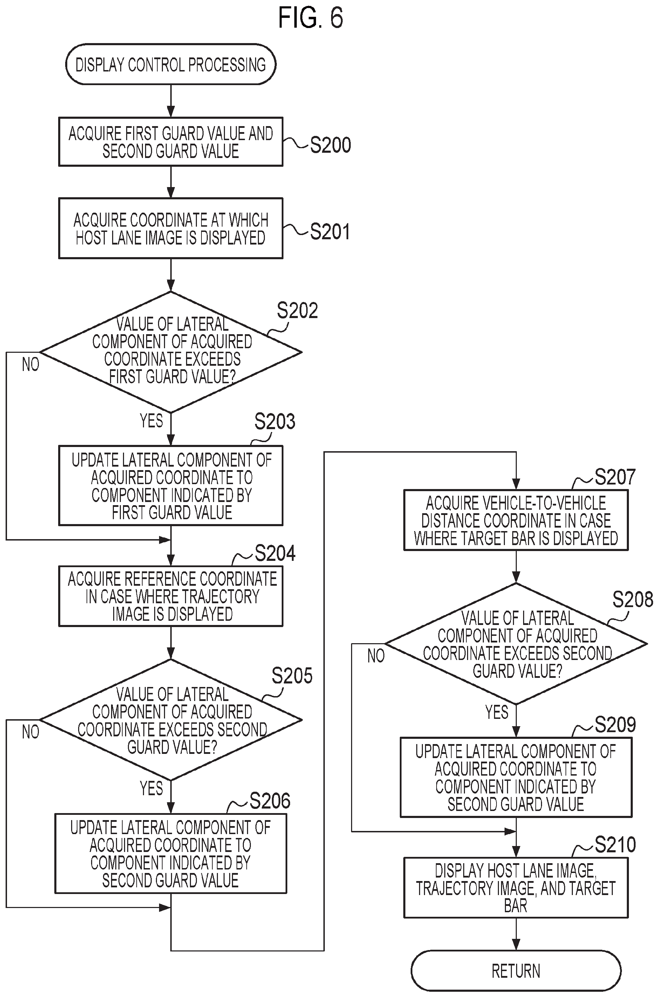

Next, a flow of processing of correcting and displaying the display position of the image related to the peripheral information of the vehicle displayed on the display section during the operation of the LCA will be described with reference to FIGS. 5 and 6. FIG. 5 is a flowchart showing an example of a flow of detection processing according to the present embodiment. The detection processing is executed by the CPU 30 of the ECU 28 that reads out the program from the ROM 32 or the storage 36, and executes the program by expanding the program in the RAM 34. For example, the detection processing shown in FIG. 5 is processing that is repeatedly executed during the traveling of the vehicle.

In S100 of FIG. 5, the CPU 30 determines whether the ACC is valid. Specifically, the CPU 30 acquires the driving mode of the vehicle and determines whether the acquired driving mode is the autonomous driving mode. In a case where determination is made that the ACC is valid (S100: YES), the CPU 30 proceeds to S101. On the other hand, in a case where determination is made that the ACC is not valid (S100: NO), the CPU 30 ends the detection processing.

In S101, the CPU 30 detects the operation instruction of the LCA. That is, in a case where the ACC of the vehicle is valid and the operation instruction of the LCA is detected, the CPU 30 proceeds to S 102 and subsequent steps.

In S102, the CPU 30 executes display control processing described below. The display control processing is processing that is repeatedly executed during the operation of the LCA.

In S103, the CPU 30 determines whether the LCA is ended. Specifically, the CPU 30 determines whether the control via the function of the LCA is ended. In a case where determination is made that the LCA is ended (S103: YES), the CPU 30 ends the detection processing. On the other hand, in a case where determination is made that the LCA is not ended (S103: NO), the CPU 30 returns to S102.

FIG. 6 is a flowchart showing an example of a flow of the display control processing according to the present embodiment. The display control processing is processing for setting the display position of the image related to the peripheral information of the vehicle displayed on the display section within the range indicated by the guard value. For example, the display control processing shown in FIG. 6 is processing executed in S102 (see FIG. 5).

In S200 of FIG. 6, the CPU 30 acquires the first guard value and the second guard value. The CPU 30 acquires the first guard value and the second guard value from, for example, the ROM 32.

In S201, the CPU 30 acquires coordinates at which the host lane image M2 is displayed. Specifically, the CPU 30 acquires coordinates of a left end and a right end of the host lane image M2 on the display section (hereinafter, also referred to as left and right ends).

In S202, the CPU 30 determines whether the value of the lateral component of each of the acquired coordinates exceeds the first guard value. Specifically, the CPU 30 determines whether the value of the lateral component of each of the coordinates indicating the left and right ends of the host lane image M2 acquired in S201 exceeds the first guard value. The CPU 30 determines, for example, whether the lateral component of the coordinate of the right end of the host lane image M2 is to the right of the lateral component of the coordinates indicating the broken line 90R (see FIG. 3). In addition, the CPU 30 determines whether the lateral component of the coordinate of the left end of the host lane image M2 is to the left of the lateral component of the coordinates indicating the broken line 90L (see FIG. 3).

In a case where determination is made that the value of the lateral component of each of the acquired coordinates exceed the first guard value (S202: YES), the CPU 30 proceeds to S203. On the other hand, in a case where determination is made that the value of the lateral component of each of the acquired coordinates does not exceed the first guard value (S202: NO), the CPU 30 proceeds to S204.

In S203, the CPU 30 updates the lateral component of each of the acquired coordinates to the component indicated by the first guard value. Specifically, the CPU 30 updates the value of the lateral component of each of the coordinates indicating the left and right ends of the host lane image M2 that is determined to exceed the first guard value in S202, to the value of the lateral component of a corresponding one of the coordinates indicating the broken line 90L and the broken line 90R. The CPU 30 may update the value of the lateral component of each of the coordinates indicating the left and right ends of the host lane image M2 to the value of the lateral component of any coordinate in the range G1 (see FIG. 3).

In S204, the CPU 30 acquires the reference coordinates in a case where the trajectory image M3 is displayed. The CPU 30 acquires, for example, the reference coordinates 70B, 70C.

In S205, the CPU 30 determines whether the value of the lateral component of each of the acquired coordinates exceeds the second guard value. Specifically, the CPU 30 determines whether the value of the lateral component of each of the reference coordinates 70B, 70C acquired in S204 exceeds the second guard value. The CPU 30 determines, for example, whether the lateral component of the reference coordinates 70B, 70C is to the right of the lateral component of the coordinates indicating the broken line 100R (see FIG. 3). In addition, the CPU 30 determines whether the lateral component of the reference coordinates 70B, 70C is to the left of the lateral component of the coordinates indicating the broken line 100L (see FIG. 3).

In a case where determination is made that the value of the lateral component of each of the acquired coordinates exceeds the second guard value (S205: YES), the CPU 30 proceeds to S206. In a case where determination is made that the value of the lateral component of each of the acquired coordinates does not exceed the second guard value (S205: NO), the CPU 30 proceeds to S207.

In S206, the CPU 30 updates the lateral component of each of the acquired coordinates to the component indicated by the second guard value. Specifically, the CPU 30 updates the value of the lateral component of each of the reference coordinates 70B, 70C acquired in S204 to the value of the lateral component of a corresponding one of the coordinates indicating the broken line 100L and the broken line 100R. The CPU 30 may update the value of the lateral component of each of the reference coordinates 70B, 70C to the value of the lateral component of any coordinate in the range G2 (see FIG. 3).

In S207, the CPU 30 acquires the vehicle-to-vehicle distance coordinate 80 in a case where the target bar M4 is displayed.

In S208, the CPU 30 determines whether the value of the lateral component of the acquired coordinate exceeds the second guard value. Specifically, the CPU 30 determines whether the value of the lateral component of the vehicle-to-vehicle distance coordinate 80 acquired in S207 exceeds the second guard value. The CPU 30 determines, for example, whether the lateral component of the vehicle-to-vehicle distance coordinate 80 is to the right of the lateral component of the coordinates indicating the broken line 100R (see FIG. 3). In addition, the CPU 30 determines whether the lateral component of the vehicle-to-vehicle distance coordinate 80 is to the left of the lateral component of the coordinates indicating the broken line 100L (see FIG. 3).

In a case where determination is made that the value of the lateral component of the acquired coordinate exceeds the second guard value (S208: YES), the CPU 30 proceeds to S209. In a case where determination is made that the value of the lateral component of the acquired coordinate does not exceed the second guard value (S208: NO), the CPU 30 proceeds to S210.

In S209, the CPU 30 updates the lateral component of the acquired coordinate to the component indicated by the second guard value. Specifically, the CPU 30 updates the value of the lateral component of the vehicle-to-vehicle distance coordinate 80 acquired in S207 to the value of the lateral component of a corresponding one of the coordinates indicating the broken line 100L and the broken line 100R. The CPU 30 may update the lateral component of the vehicle-to-vehicle distance coordinate 80 to the value of the lateral component of any coordinate in the range G2 (see FIG. 3).

In S210, the CPU 30 displays the host lane image M2, the trajectory image M3, and the target bar M4. Specifically, the CPU 30 displays the host lane image M2 at a position indicated by the coordinate updated in S203 or the coordinate acquired in S201, displays the trajectory image M3 at a position indicated by the coordinate updated in S206 or the coordinate acquired in S204, and displays the target bar M4 at a position indicated by the coordinate updated in S209 or the coordinate acquired in S207. Then, the CPU 30 ends the display control processing.

The vehicle display control device 10 according to the present embodiment recognizes the host lane and the adjacent lane, detects the operation instruction of the LCA in a case where the ACC is valid, acquires the first guard value and the second guard value, displays the host lane image M2 in the range G1 up to the first guard value, and displays the trajectory image M3 such that the center of the trajectory image M3 is positioned in the range G2 up to the second guard value. Therefore, with the vehicle display control device 10 according to the present embodiment, the anxiety given to the occupant due to the deviation between a real scene and the display of the display region when a lane change is performed can be reduced.

The first guard value according to the present embodiment is a value of the lateral component of the coordinates of the broken lines 90 indicating the position of a lane divider, among the lane dividers of the adjacent lane, that is located away from the host lane in the case where the operation instruction of the LCA is detected. Therefore, with the vehicle display control device 10 according to the present embodiment, it is possible to suppress the host lane image from being displayed at a position beyond the adjacent lane.

The second guard value according to the present embodiment is a value of the lateral component of the coordinates of the broken lines 100 indicating the center position of the adjacent lane in the case where the operation instruction of the LCA is detected. Therefore, with the vehicle display control device 10 according to the present embodiment, it is possible to suppress the reference coordinates 70 in a case where the trajectory image M3 is displayed from being set at a position beyond a center position of the adjacent lane.

The vehicle display control device 10 according to the present embodiment sets the vehicle-to-vehicle distance coordinate 80 in the range up to the second guard value to display the target bar M4. Therefore, with the vehicle display control device according to the present embodiment, it is possible to suppress the display position of the target bar M4 from being largely deviated.

The vehicle display control device 10 according to the present embodiment sets the reference coordinates 70B, 70C in the range G2 up to the second guard value, and displays the trajectory image M3 on the trajectory connecting the points indicated by the reference coordinates 70 including reference coordinates 70B, 70C. Therefore, with the vehicle display control device 10 according to the present embodiment, it is possible to suppress the display of the trajectory image M3 from being largely deviated.

In addition, the configuration of the vehicle display control device 10 described in the above-described embodiment is an example, and may be changed in accordance with a situation within a range not departing from the gist. In addition, the flow of the processing of the program described in the above-described embodiment is an example, and unnecessary steps may be deleted, new steps may be added, or the processing order may be changed within the range not departing from the gist.

In addition, each of the processing executed by the CPU that reads software (program) in the above-described embodiment may be executed by various processors other than the CPU. Examples of the processor in this case include a programmable logic device (PLD) of which a circuit configuration can be changed after manufacture, such as a field-programmable gate array (FPGA), and a dedicated electric circuit that is a processor having a circuit configuration dedicatedly designed to execute specific processing, such as an application-specific integrated circuit (ASIC).

In addition, in the above-described embodiment, the aspect has been described in which the program for information processing is stored (installed) in the storage in advance, but the present disclosure is not limited to this. The program may be provided in a form of being recorded on a recording medium such as a compact disc read-only memory (CD-ROM), a digital versatile disc read-only memory (DVD-ROM), and a universal serial bus (USB) memory. In addition, the program may be downloaded from an external device via a network. The present disclosure can also be applied to a program and a program product.

## Claims

1. A vehicle display control device (10) comprising:
a recognition unit (52) configured to recognize a host lane on which a host vehicle travels and an adjacent lane that is adjacent to the host lane;
a detection unit (54) configured to detect a lane change instruction for the host vehicle in a case where a preceding vehicle following function of the host vehicle is valid;
an acquisition unit (56) configured to acquire a first guard value that is an allowable upper limit value in a lane width direction of a position at which a host lane image simulating the host lane is displayed in a display region provided in the host vehicle, and a second guard value that is an allowable upper limit value in the lane width direction when a path image is displayed, the path image simulating a lane change path from the host lane to the adjacent lane when the host vehicle changes a lane; and
a display controller (58) configured to display the host lane image in a range up to the first guard value that is acquired and display the path image such that a center of the path image in the lane width direction is positioned in a range up to the second guard value that is acquired, in a case where the detection unit (54) detects the lane change instruction.

2. The vehicle display control device (10) according to claim 1, wherein the first guard value is a value of a component in the lane width direction of a coordinate indicating a position of a lane boundary of the adjacent lane recognized when the lane change instruction is detected, the lane boundary being not in contact with the host lane.

3. The vehicle display control device (10) according to claim 1 or claim 2, wherein the second guard value is a value of a component in the lane width direction of a coordinate indicating a center position of the adjacent lane recognized when the lane change instruction is detected.

4. The vehicle display control device (10) according to any of claims 1 to 3, wherein the display controller (58) is configured to
set, in the range up to the second guard value that is acquired, a vehicle-to-vehicle distance coordinate serving as a reference when an icon indicating a set vehicle-to-vehicle distance is displayed, and
display the icon.

5. The vehicle display control device (10) according to any of claims 1 to 4, wherein the display controller (58) is configured to
set, in the range up to the second guard value that is acquired, a first reference coordinate indicating a turning-completion position of the lane change path on the adjacent lane and a second reference coordinate indicating a position where control relating to the lane change ends, the first reference coordinate and the second reference coordinate serving as references when the path image is displayed, and
display the path image on a trajectory connecting points indicated by the first reference coordinate and the second reference coordinate.
